# EUROPEAN PATENT SPECIFICATION

(11) **EP 1 323 272 B1**
(45) Date of publication and mention of the grant of the patent: **07.07.2004**
(21) Application number: 01935736.7
(22) Date of filing: 22.05.2001
(51) Int. Cl.: H04L 29/06, H04L 12/44, H04L 12/413, H04L 12/46

(54) **ARRANGEMENT FOR CONVERTING BETWEEN A REDUCED MEDIA INDEPENDENT INTERFACE DATA STREAM AND A MEDIA INDEPENDENT INTERFACE DATA STREAM**
EINRICHTUNG ZUR UMSETZUNG EINES MEDIENUNABHÄNGIGE-SCHNITTSTELLE-DATENSTROMES (MII) IN EINEN REDUZIERTE-MEDIENUNABHÄNGIGE-SCHNITTSTELLE-DATENSTROM (RMII)
DISPOSITIF DE CONVERSION ENTRE UN FLUX DE DONNEES D'INTERFACE INDEPENDANTE DU SUPPORT REDUITE ET UN FLUX DE DONNEES D'INTERFACE INDEPENDANTE DU SUPPORT

(30) Priority: 04.10.2000 US 678731
(43) Date of publication of application: 02.07.2003
(73) Proprietor: ADVANCED MICRO DEVICES INC., Sunnyvale, California 94088-3453 (US)
(72) Inventor: COOPER, Melissa, Mountain View, CA 94043 (US); STERNER, Rudolph, J., Los Altos, CA 94022 (US)
(74) Representative: Wright, Hugh Ronald
(86) International application number: PCT/US2001/016613
(87) International publication number: WO 2002/030086

(56) References cited:
- US-A- 5 852 609
- US-A- 5 892 768

## Description

### FIELD OF THE INVENTION

The present invention relates to testing of integrated network devices such as integrated network switches configured for switching data packets between subnetworks.

### BACKGROUND ART

Local area networks use a network cable or other media to link stations on the network. Each local area network architecture uses a media access control (MAC) enabling network interface devices at each network node to access the network medium.

Switched local area networks are encountering increasing demands for higher speed connectivity, more flexible switching performance, and the ability to accommodate more complex network architectures. For example, commonly-assigned U.S. Patent No. 5,953,335 discloses a network switch configured for switching layer 2 type Ethernet (IEEE 802.3) data packets between different network nodes; a received layer 2 type data packet may include a VLAN (virtual LAN) tagged frame according to IEEE 802.1p (802.1D) protocol that enables the network switch to perform more advanced switching operations. For example, the VLAN tag may specify another subnetwork (via a router) or a prescribed group of stations.

A particular concern in testing high-performance integrated network switches implemented on a single chip is incompatibility of existing test equipment with newer switch designs. For example, newer devices reduce pin count by utilizing a Reduced Media Independent Interface (RMII), published by the RMII Consortium. The RMII utilizies six (6) pins per port and one pin per switch ASIC, as opposed to a conventional Media Independent Interface (MII) specified by IEEE 802.3u[2] as having sixteen (16) pins per port, enabling the pin count for integrated multiple port devices such as switches, hubs, repeaters, etc. to be substantially reduced.

Hence, existing test equipment having only an MII interface for connecting devices under test currently are unusable for testing newer integrated devices having RMII interfaces. Hence, a test designer is unable to test the device, for example by sending and receiving test packets, to verify operation of the device under test.

U.S Patent No. 5,852,609 discloses a method and an apparatus which converts Media Independent Interface signals to DVB compliant signals.

### SUMMARY OF THE INVENTION

There is a need for an arrangement that enables a data stream to be converted between an MII interface and an RMII interface for flexibility in testing an integrated network device having an interface that is not compatible with a test device.

These and other needs are attained by the present invention, where a conversion device is configured for converting reduced media independent interface signals into media independent interface signals, and media independent interface signals into reduced media independent interface signals. Hence, a device under test, for example an integrated network switch utilizing a reduced media independent interface, can be tested by test equipment configured for sending and receiving data packets across a media independent interface using the conversion device to convert between the two interfaces.

One aspect of the present invention provides a method for converting data streams. The method includes receiving a first data stream from a media access controller according to a reduced media independent interface protocol, converting the first data stream to a second data stream compliant with a media independent interface protocol, and outputting the second data stream and media independent interface control signals according to the media independent interface protocol. Outputting the second data stream and media independent interface (MII) control signals based on the first data stream provides compatibility between conventional MII devices and newer integrated network devices utilizing newer reduced media independent interface (RMII) protocols to reduce pin count. Hence, newer integrated network devices utilizing the RMII protocol can be connected to older devices utilizing a conventional MII, for example test devices or conventional physical layer transceivers.

Another aspect of the present invention provides an apparatus configured for converting a reduced media independent interface protocol and a media independent interface protocol. The apparatus includes a reduced media independent interface configured for receiving a transmit data stream according to a reduced media independent interface protocol, logic configured for converting the transmit data stream to a modified transmit data stream compliant with a media independent interface protocol, and a media independent interface configured for outputting the modified transmit data stream according to the media independent interface protocol.

Additional advantages and novel features of the invention will be set forth in part in the description which follows and in part will become apparent to those skilled in the art upon examination of the following or may be learned by practice of the invention. The advantages of the present invention may be realized and attained by means of instrumentalities and combinations particularly pointed in the appended claims.

### BRIEF DESCRIPTION OF THE DRAWINGS

Reference is made to the attached drawings, wherein elements having the same reference numeral designations represent like elements throughout and wherein:
Figure 1 is a block diagram of a system configured for converting an RMII data stream from a device under test, for example an integrated network switch, into an MII data stream for use by an MII based device.
Figures 2A and 2B are diagrams summarizing the method of converting between an RMII data stream and an MII data stream according to an embodiment of the present invention.

### BEST MODE FOR CARRYING OUT THE INVENTION

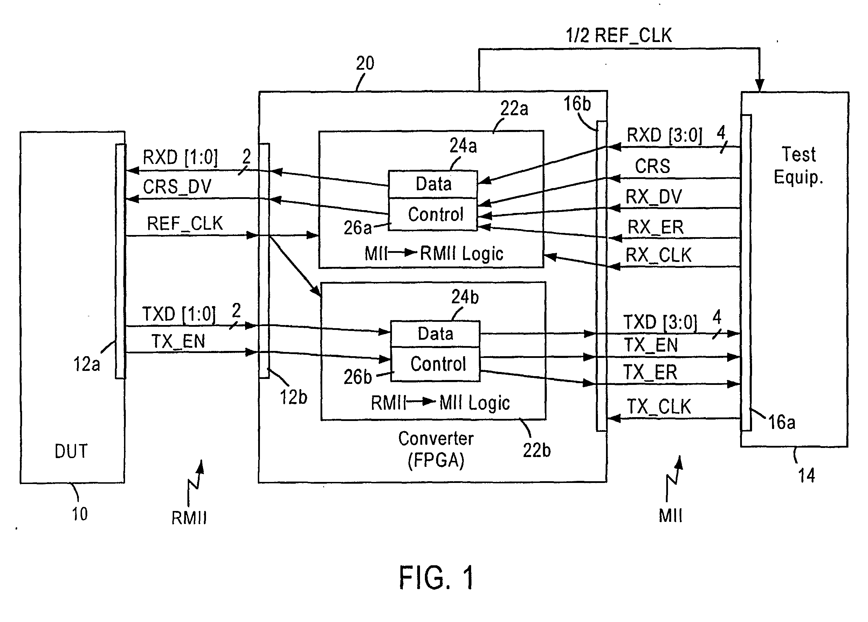

Figure 1 is a block diagram illustrating a testing system configured for testing an integrated (i.e., single chip) network device 10, for example a multiport switch having switch ports that include a media access controller (MAC), enabling transmission and reception of layer 2 type data packets between network stations at 10 or 100 Mbps according to a reduced media independent interface protocol. In particular, the network device 10, also referred to as the device under test (DUT), includes an RMII interface 12a for transmission and reception of transmit and receive data streams according to the RMII specification published by the RMII Consortium. In particular, the RMII interface 12 includes a 2-bit receive data path (RXD), a carrier sense/data valid signal (CRS_DV), a clock signal (REF_CLK), a 2-bit transmit data path (TXD), and a transmit enable signal (TX_EN).

The testing system also includes test equipment 14 (or a physical layer transceiver) having a media independent interface 16a for transmission and reception of transmit and receive data streams according to the MII protocol specified by IEEE 802.3u[2]. In particular, the MII includes a 4-bit receive data path (RXD), a carrier sense signal (CRS), a receive data valid signal (RX_DV), a receive error signal (RX_ER), a receive clock signal (RX_CLK), a 4-bit transmit data path (TXD), a transmit enable signal (TX_EN), a transmit error signal (TX_ER), and a transmit clock (TX_CLK).

As described above, the differences between the RMII interface and the MII interface prevent the RMII interface 12a of the device under test 10 from being directly connected to the MII interface 16a of the test equipment 14. However, products such as the device under test 10 need to be rapidly tested as they are being developed to minimize delays in introducing the device under test 10 to market. Hence, the acquisition of test devices having RMII interfaces may be unacceptably costly and may cause substantial delays in the testing process.

According to the disclosed embodiment, a converter 20 is configured for converting between the RMII interface 12a and the MII interface 16a, enabling interoperability between the RMII-based device under test 10 and the MII-based test equipment 14. The converter 20, implemented for example using a field programmable gate array (FPGA), includes an RMII interface 12b configured for sending and receiving the RMII signals between the device under test 10, an MII interface 16b configured for sending and receiving the MII signals between the test equipment 14, and conversion logic 22.

The conversion logic 22 includes a first logic block 22a configured for converting the MII signals into RMII signals, and a second logic block 22b configured for converting the RMII signals into MII signals. Each logic block 22 includes data conversion logic 24 and control signal conversion logic 26 for converting the data signals and the control signals, respectively. Although the conversion logic 22a is illustrated as converting MII receive data (RXD) into RMII receive data (RXD) and the conversion logic 22b is illustrated as converting RMII transmit data (TXD) into MII transmit data (TXD), additional logic can be added to provide symmetrical conversion, such that the converter 20 also can convert MII transmit data (TXD) and RMII receive data (RXD).

The RMII and MII data streams are converted using an RMII clock (REF_CLK) that is at least twice the frequency of the MII clocks (TX_CLK or RX_CLK). For example, if the MII clock rate runs at a maximum rate of 100 Mbps (25 MHz), the RMII clock runs at 50 MHz. However if the MII runs at 10 Mbps or 2.5 MHz, the RMII clock can be divided by 20 to obtain the 10 Mbps data rate.

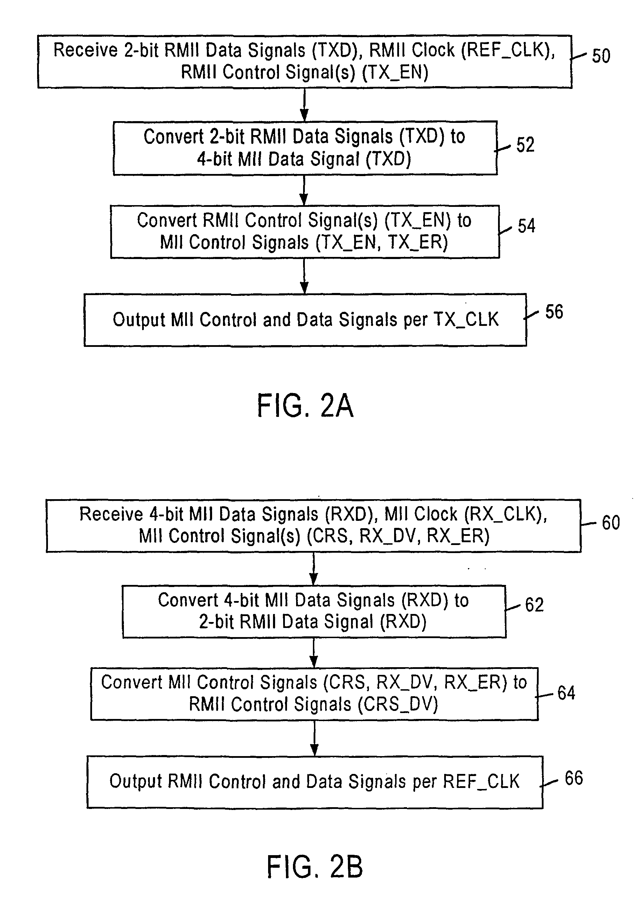

Figures 2A and 2B are diagrams summarizing the method of converting between the RMII and MII data streams according to an embodiment of the present invention. Conversion of the 2-bit RMII transmit data stream (TXD) begins in step 50 of Figure 2A by the conversion logic 22b receiving the RMII data signals (TXD), the RMII clock (REF_CLK), and the RMII control signal (TX_EN) in step 50. The data conversion logic 24b converts the 2-bit transmit data path based on the 50 MHz clock into a 4-bit 100 Mb/s transmit data path in step 52. The control signal conversion logic 26b converts (''reflects'') the RMII control signal to the MII control signals in step 54, according to the MII and RMII specifications, and the MII interface 16b outputs the converted MII signals in step 56.

Conversion of the 4-bit MII receive data stream (RXD) begins in step 60 of Figure 2B by the conversion logic 22a receiving the MII data signals (RXD), the MII clock (RX_CLK), and the MII control signals (CRS, RX_DV, RX_ER). The data conversion logic 24a converts the 4-bit receive data path (RXD) into the 2-bit RMII data stream (RXD) in step 62. The control signal conversion logic 26a converts ("reflects") the MII control signals to the RMII control signal (CRS_DV) in step 64, and the RMII interface 12b outputs the RMII control and data signals according to the RMII clock in step 66.

According to the disclosed embodiment, data streams are converted between the RMII interface protocol and the MII interface protocol, enabling integrated devices to be tested using test equipment having different media interfaces, reducing compatibility problems associated with testing newer interfaces using existing testing equipment.

While this invention has been described with what is presently considered to be the most practical preferred embodiment, it is to be understood that the invention is not limited to the disclosed embodiments, but, on the contrary, is intended to cover various modifications and equivalent arrangements included within scope of the appended claims.

## Claims

1. A method comprising:
receiving a first data stream from a media access controller according to a reduced media independent interface protocol (50);
converting the first data stream to a second data stream compliant with a media independent interface protocol (52); and
outputting the second data stream and media independent interface control signals according to the media independent interface protocol (56).

2. The method of claim 1, wherein the receiving step includes receiving a 2-bit transmit data stream as the first data stream from the media access controller, the converting step including converting the 2-bit transmit data stream into a 4-bit transmit data stream as the second data stream.

3. The method of claim 2, wherein the outputting step includes generating the media independent interface control signals based on reception of reduced media independent interface control signals from the media access controller.

4. The method of claim 3, wherein the converting step and the outputting step are performed by a field programmable gate array.

5. The method of claim 3, wherein the generating step includes generating a clock for the media independent interface having a prescribed frequency based on reception of a reduced media independent interface reference clock having twice the prescribed frequency of the clock for the media independent interface.

6. The method of claim 3, wherein the step of generating a clock includes generating the clock at one of 2.5 MHz and 25 MHz as the prescribed frequency based on the reduced media independent interface reference clock having a rate of 50 MHz.

7. The method of claim 2, further comprising:
receiving a third 4-bit data stream according to the media independent interface protocol;
converting the third 4-bit data stream into a fourth 2-bit data stream compliant with the reduced media independent interface protocol; and
outputting the fourth 2-bit data stream to the media access controller according to the reduced media independent interface protocol.

8. An apparatus comprising:
a reduced media independent interface configured for receiving a transmit data stream according to a reduced media independent interface protocol (12b);
logic configured for converting the transmit data stream to a modified transmit data stream compliant with a media independent interface protocol (22b) and
a media independent interface configured for outputting the modified transmit data stream according to the media independent interface protocol (16b).

9. The apparatus of claim 8, wherein the logic includes control signal logic configured for generating media independent interface transmit control signals based on reception of reduced media independent interface transmit control signals.

10. The apparatus of claim 9, wherein the logic is configured for converting a receive data stream, received from the media independent interface, into a modified receive data stream according to the reduced media independent interface protocol, the control signal logic configured for generating at least one reduced media independent interface control signal based on media independent interface control signals.

## Patentansprüche

1. Verfahren mit den folgenden Schritten:
Empfangen eines ersten Datenstroms von einem Medienzugriffscontroller nach einem reduzierten, medienunabhängigen Interfaceprotokoll (50),
Umwandeln des ersten Datenstroms in einen zweiten Datenstrom gemäß einem medienunabhängigen Interfaceprotokoll (52) und
Ausgeben des zweiten Datenstroms und medienunabhängiger Interfacesteuersignale entsprechend dem medienunabhängigen Interfaceprotokoll (56).

2. Verfahren nach Anspruch 1, bei dem der Schritt des Empfangens das Empfangen eines 2-Bit-Sendedatenstroms als den ersten Datenstrom vom Medienzugriffscontroller umfaßt, und der Schritt des Umwandelns das Umwandeln des 2-Bit-Sendedatenstroms in einen 4-Bit-Sendedatenstrom als den zweiten Datenstrom umfaßt.

3. Verfahren nach Anspruch 2, bei dem der Schritt des Ausgebens das Erzeugen der medienunabhängigen Interfacesteuersignale basierend auf dem Empfang reduzierter medienunabhängiger Interfacesteuersignale vom Medienzugriffscontroller umfaßt.

4. Verfahren nach Anspruch 3, bei dem der Schritt des Umwandelns und der Schritt Ausgebens durch ein feldprogrammierbares Gatter-Array ausgeführt werden.

5. Verfahren nach Anspruch 3, bei dem der Schritt des Erzeugens das Erzeugen eines Takts für das medienunabhängige Interface mit einer vorgeschriebenen Frequenz basierend auf dem Empfang eines reduzierten medienunabhängigen Interface-Referenztakts erzeugt, der die doppelte vorgeschriebene Frequenz des Takts des medienunabhängigen Interface hat.

6. , Verfahren nach Anspruch 3, bei dem der Schritt des Erzeugens eines Takts das Erzeugen des Takts mit entweder 2,5 MHz oder 25 MHz als der vorgeschriebenen Frequenz basierend auf dem reduzierten medienunabhängigen Interface-Referenztakt mit einer Rate von 50 MHz umfaßt.

7. Verfahren nach Anspruch 2, ferner mit den folgenden Schritten:
Empfangen eines dritten 4-Bit-Datenstroms gemäß dem medienunabhängigen Interfaceprotokoll;
Umwandeln des dritten 4-Bit-Datenstroms in einen vierten 2-Bit-Datenstrom gemäß dem reduzierten medienunabhängigen Interfaceprotokoll, und
Ausgeben des vierten 2-Bit-Datenstroms an den Medienzugriffscontroller gemäß dem reduzierten medienunabhängigen Interfaceprotokoll.

8. Vorrichtung mit:
einem reduzierten medienunabhängigen Interface zum Empfangen eines Sendedatenstroms nach einem reduzierten, medienunabhängigen Interfaceprotokoll (12b),
einer Logik zum Umwandeln des Sendedatenstroms in einen modifizierten Sendedatenstrom gemäß einem medienunabhängigen Interfaceprotokoll (22b), und
einem medienunabhängigen Interface zum Ausgeben des modifizierten Sendedatenstroms entsprechend dem medienunabhängigen Interfaceprotokoll (16b).

9. Vorrichtung nach Anspruch 8, bei der die Logik eine Steuersignallogik zum Erzeugen von medienunabhängigen Interfacesendesteuersignalen basierend auf dem Empfang reduzierter medienunabhängiger Interfacesendesteuersignale umfaßt.

10. Vorrichtung nach Anspruch 9, bei der die Logik zum Umwandeln eines Empfangsdatenstroms, der von dem medienunabhängigen Interface her empfangen wurde, in einen modifizierten Empfangsdatenstrom entsprechend dem reduzierten medienunabhängigen Interfaceprotokoll ausgebildet ist, wobei die Steuersignallogik zum Erzeugen wenigstens eines reduzierten medienunabhängigen Interfacesteuersignals basierend auf medienunabhängigen Interfacesteuersignalen ausgebildet ist.

## Revendications

1. Procédé consistant à :
recevoir un premier flux de données issues d'un contrôleur d'accès au support selon un protocole d'interface indépendante du support réduite (50) ;
convertir le premier flux de données en un second flux de données conforme au protocole d'interface indépendante du support (52) ; et
délivrer le second flux de données et des signaux de commande d'interface indépendante du support suivant le protocole d'interface indépendante du support (56) .

2. Procédé selon la revendication 1, dans lequel l'étape de réception inclut de recevoir un flux de données d'émission à 2 binaires comme premier flux de données issu du contrôleur d'accès au support, l'étape de conversion incluant de convertir le flux de données d'émission à 2 binaires en un flux de données d'émission à 4 binaires en tant que second flux de données.

3. Procédé selon la revendication 2 dans lequel l'étape de délivrance inclut de générer les signaux de commande d'interface indépendante du support sur la base de réception des signaux de commande d'interface indépendante du support réduite issus du contrôleur d'accès au support.

4. Procédé selon la revendication 3 dans lequel l'étape de conversion et l'étape de délivrance sont exécutées par un tableau de portes programmable sur le champ.

5. Procédé selon la revendication 3 dans lequel l'étape de génération inclut de générer une horloge pour l'interface indépendante du support présentant une fréquence prescrite sur la base de réception d'une horloge de référence d'interface indépendante du support réduite ayant deux fois la fréquence prescrite de l'horloge destinée à l'interface indépendante du support.

6. Procédé selon la revendication 3 dans lequel l'étape consistant à générer une horloge inclut de générer l'horloge à l'une des fréquences de 2,5 MHz ou 25 MHz comme fréquence prescrite sur la base de l'horloge de référence d'interface indépendante du support réduit ayant une fréquence de 50 MHz.

7. Procédé selon la revendication 2 consistant, de plus, à :
recevoir un troisième flux de données à 4 binaires selon le protocole d'interface indépendante du support ;
convertir le troisième flux de données à 4 binaires en un quatrième flux de données à 2 binaires conforme au protocole d'interface indépendante du support réduite; et
délivrer le quatrième flux de données à 2 binaires au contrôleur d'accès au support selon le protocole d'interface indépendante du support réduite .

8. Dispositif comprenant :
une interface indépendante du support réduite configurée pour recevoir un flux de données d'émission suivant un protocole d'interface indépendante du support réduite (12b) ;
une logique configurée pour convertir le flux de données d'émission en un flux de données d'émission modifié conforme au protocole d'interface indépendante du support (22b) ; et
une interface indépendante du support configurée pour délivrer le flux modifié de données d'émission suivant le protocole d'interface indépendante du support (16b).

9. Dispositif selon la revendication 8 dans lequel la logique comprend une logique de signaux de commande configurée pour générer des signaux de commande d'émission d'interface indépendante du support sur la base d'une réception de signaux de commande d'émission d'interface indépendante du support réduite.

10. Dispositif selon la revendication 9 dans lequel la logique est configurée pour convertir un flux de données de réception, reçu à partir de l'interface indépendante du support, en un flux de données de réception modifié suivant le protocole d'interface indépendante du support réduite, la logique de signaux de commande étant configurée pour générer au moins un signal de commande d'interface indépendante du support réduite sur la base des signaux de commande d'interface indépendante du support.
